(19) **Europäisches Patentamt / European Patent Office / Office européen des brevets**

(11) **EP 3 785 411 B1**

(12) **FASCICULE DE BREVET EUROPEEN**

(45) Date de publication et mention de la délivrance du brevet:
**16.04.2025 Bulletin 2025/16**

(21) Numéro de dépôt: **19718722.2**

(22) Date de dépôt: **24.04.2019**

(51) Classification Internationale des Brevets (IPC):
$H04K\ 1/00$ (2006.01)   $H04L\ 9/40$ (2022.01)
$H04W\ 12/106$ (2021.01)   $H04L\ 9/30$ (2006.01)
$H04L\ 9/32$ (2006.01)

(52) Classification Coopérative des Brevets (CPC):
**H04L 63/123; H04K 1/00; H04W 12/106;**
H04L 9/304; H04L 9/3236

(86) Numéro de dépôt international:
**PCT/EP2019/060444**

(87) Numéro de publication internationale:
**WO 2019/206949 (31.10.2019 Gazette 2019/44)**

(54) **PROCÉDÉ ET SYSTÈME POUR ASSURER L'INTÉGRITÉ DE DONNÉES CONFIDENTIELLES DIFFUSÉES**

VERFAHREN UND SYSTEM ZUR SICHERSTELLUNG DER INTEGRITÄT VON VERTRAULICHEN RUNDFUNKDATEN

METHOD AND SYSTEM FOR ENSURING THE INTEGRITY OF BROADCAST CONFIDENTIAL DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2018 FR 1800371**

(43) Date de publication de la demande:
**03.03.2021 Bulletin 2021/09**

(73) Titulaire: **THALES**
**92190 Meudon (FR)**

(72) Inventeurs:
• **GARRIDO, Eric**
**92622 Gennevilliers Cedex (FR)**
• **PAINCHAULT, Philippe**
**92622 Gennevilliers Cedex (FR)**
• **BELAID, Sonia**
**75001 Paris (FR)**
• **MARTINELLI, Jean**
**92622 Gennevilliers Cedex (FR)**
• **DELAVEAU, François**
**92622 Gennevilliers Cedex (FR)**
• **KAMENI, Christiane**
**Mountain View, California 94043 (US)**

• **MOLIERE, Renaud**
**92622 Gennevilliers Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-B1- 9 912 479**

• **HARRISON WILLIE K ET AL: "Coding for Secrecy: An Overview of Error-Control Coding Techniques for Physical-Layer Security", IEEE SIGNAL PROCESSING MAGAZINE, IEEE, USA, vol. 30, no. 5, 1 September 2013 (2013-09-01), pages 41 - 50, XP011524815, ISSN: 1053-5888, [retrieved on 20130819], DOI: 10.1109/MSP.2013.2265141**
• **MAURER U M: "Secret key agreement by public discussion from common information", IEEE TRANSACTIONS ON INFORMATION THEORY, IEEE PRESS, USA, vol. 39, no. 3, May 1993 (1993-05-01), pages 733 - 742, XP011290579, ISSN: 0018-9448**

- **AL-HASSAN SALAH ET AL: "Secrecy coding for the wiretap channel using best known linear codes", GLOBAL INFORMATION INFRASTRUCTURE SYMPOSIUM - GIIS 2013, IEEE, 28 October 2013 (2013-10-28), pages 1 - 6, XP032531241, DOI: 10.1109/GIIS.2013.6684342**
- **WEGMAN M N ET AL: "NEW HASH FUNCTIONS AND THEIR USE IN AUTHENTICATION AND SET EQUALITY", JOURNAL OF COMPUTER AND SYSTEM SCIEN, ACADEMIC PRESS, INC., LONDON, GB, vol. 3, no. 22, June 1981 (1981-06-01), pages 265 - 279, XP008003418, ISSN: 0022-0000, DOI: 10.1016/0022-0000(81) 90033-7**

**Description**

L'invention concerne un procédé et un système permettant d'assurer l'intégrité des données confidentielles diffusées au sein d'un système de communication utilisant la technique de codage secret plus connue sous le terme anglo-saxon « secrecy coding ».

Le « secrecy coding » divulgué par exemple dans le document AL-HASSAN SALAH ET AL: "Secrecy coding for the wiretap channel using best known linear codes",GLOBAL INFORMATION INFRASTRUCTURE SYMPOSIUM - GIIS 2013, IEEE, 28 octobre 2013 (2013-10-28), pages 1-6, XP032531241,DOI: 10.1109/GIIS.2013.6684342 ou dans le document HARRISON WILLIE K ET AL: "Coding for Secrecy: An Overview of Error-Control Coding Techniques for Physical-Layer Security",IEEE SIGNAL PROCESSING MAGAZINE, IEEE, USA, vol. 30, no. 5, 1 septembre 2013 (2013-09-01), pages 41-50, XP011524815,ISSN: 1053-5888, DOI: 10.1109/MSP.2013.2265141 [extrait le 2013-08-19]. fait référence à un cadre théorique connu dans l'état de l'art de la théorie de l'information qui analyse la possibilité pour un émetteur Alice de transmettre à un destinataire Bob un message sur un canal de communication de manière confidentielle sans utiliser de clé secrète partagée préalablement. Ce cadre repose uniquement sur les caractéristiques supposées distinctes du canal de propagation et du bruit en réception au niveau de Bob d'une part, et au niveau de l'attaquant potentiel d'autre part (attaquant appelé Eve). L'exemple théorique le plus simple est le modèle du canal à jarretière où Bob reçoit les bits transmis par Alice sans erreur et où Eve ne peut les récupérer qu'avec un taux d'erreur non nul. Ce modèle se généralise à des cas de modèles d'erreurs en réception (au niveau de Bob) et en écoute (au niveau d'Eve) plus complexes. Un autre exemple emprunté à la protection de système de radio communications est la sécurité de la couche physique connue sous l'abréviation anglo-saxonne PHYSEC, dont l'un des procédés est l'ajout de bruit artificiel selon le schéma (simplifié) suivant: lorsqu'Alice souhaite envoyer un message m à Bob, elle encode le message et transmet C(m) avec une technique de modulation qui ajoute un bruit artificiel $J_m$ pour tout point de l'espace, à l'exception de la zone où se trouve Bob. Ce bruit est modifié à chaque message m. Bob reçoit, après démodulation, l'encodage du message $C(m) + \eta_B$ avec un bruit de transmission $\eta_B$. Le niveau de bruit $\eta_B$ permet à Bob de décoder correctement le message m. En revanche, Eve située en dehors du point occupé par Bob, seul point où la démodulation est « correcte », reçoit le message encodé $C(m) + J_m + \eta_E$ avec un bruit artificiel $J_m$ qui s'ajoute à son bruit de réception $\eta_E$. Avec ce niveau de bruit, Eve ne parvient pas à décoder le message m aussi correctement que Bob.

De manière générale, dans le cadre de la théorie de l'information, pour un modèle de canal de communication qui fixe les caractéristiques du bruit (au niveau de Bob, et au niveau d'Eve), on montre qu'il est possible de coder effectivement l'information utile avant sa transmission sur le canal de communication de manière à assurer :

- sa confidentialité (l'information d'Eve sur le message reste proche de zéro),
- sa transmission sans erreur (Bob décode l'information avec une très forte probabilité).

Pour assurer simultanément ces deux propriétés, la théorie introduit une borne théorique au débit de transmission possible, appelée « secrecy capacity ». Cette technique de confidentialité est alors dite inconditionnellement sûre (c'est-à-dire qu'elle ne dépend pas des capacités de calcul de l'attaquant), sous réserve bien entendu que le modèle de canal est correct et que l'on a en conséquence respecté la borne de « secrecy capacity » associée.

Tel quel, le « secrecy coding », ou sa variante consolidée objet de la demande de brevet FR1701398 du demandeur, publiée sous le numéro FR3076365 après le dépôt de la présente demande de brevet, a notamment pour objet d'assurer la confidentialité des messages échangés sans qu'il soit nécessaire que l'émetteur et le récepteur partagent des clés ou des secrets préétablis. Dans ce cadre, le secrecy coding est un mécanisme qui garantit uniquement la confidentialité des messages transmis, mais pas nécessairement leur intégrité, ni l'authentification des interlocuteurs. L'objet du brevet est un mécanisme complémentaire au mécanisme de secrecy coding, qui vise à garantir de nouvelles propriétés de sécurité, toujours de manière inconditionnellement sûre et sans utiliser de clés préalablement partagées ou de secrets préétablis par Alice et Bob, ce que ne garantit pas le mécanisme de secrecy coding seul :

a) L'intégrité : garantir que les messages reçus et acceptés par le destinataire n'ont pas été altérés (volontairement par l'attaquant Eve ou fortuitement (bruit)),
b) L'authentification de l'émetteur : Bob et Alice ont l'assurance à tout moment qu'ils communiquent toujours avec l'autre et pas avec un tiers Eve qui prendrait momentanément le rôle d'émetteur.

Une solution d'intégrité inconditionnellement sûre et décrite dans l'état de l'art de la cryptographie est le mécanisme dit de Carter&Wegman connu de l'homme du métier. Cette solution de l'état de l'art est divulguée dans le document WEGMAN M N ET AL: "NEW HASH FUNCTIONS AND THEIR USE IN AUTHENTICATION AND SET EQUALITY",JOURNAL OF COMPUTER AND SYSTEM SCIEN, ACADEMIC PRESS, INC., LONDON, GB, vol. 3, no. 22, juin 1981 (1981-06), pages 265-279, XP008003418, ISSN: 0022-0000, DOI: 10.1016/0022-0000(81)90033-7, et repose sur les éléments suivants :

- Alice et Bob veulent s'échanger des messages x(1), x(2), ..., x(i), ...
- Alice et Bob sélectionnent selon une clef aléatoire $k_0$ partagée par Alice et Bob, une fonction de hachage $h_{k0}$ dans une famille de fonctions de hachage dite « universelle » (la famille peut être connue par l'attaquant Eve),
- Puis, pour chaque message x(i) transmis, l'intégrité du message x(i) est garantie par la transmission d'un motif d'intégrité tag(i) associé de la forme :

$$tag(i) = h_{k_0}(\text{x}(i)) \oplus k(i)$$

- où $h_{k_0}$(x(i)) est le haché du message x(i) calculé avec la fonction de hachage précédemment sélectionnée $h_{k0}$, c'est la même pour tous les messages x(i), $\oplus$ est l'opérateur logique OU exclusif, et
- k(i) est une « clé unique à usage unique » connue sous l'expression anglo-saxonne « one-time pad ».

Dans cette solution, pour assurer le caractère inconditionnellement sûr de l'intégrité, il est impératif que la clé $k_0$ et tous les aléas k(i) consommés à chaque nouveau message transmis, soient des clés secrètes parfaitement aléatoires, indépendantes les unes des autres et partagées initialement par Alice et Bob avant la phase de communication des messages.

La présente invention peut être vue comme une déclinaison originale du même principe, adapté au cadre d'un canal de communication mettant en œuvre une technique de « secrecy coding » apportant la confidentialité sans utiliser de clé. Elle repose sur l'ajout d'un tag [tag(i)] dans chaque message x(i) transmis avant son traitement par le mécanisme de secrecy coding. Le tag est calculé également à l'aide d'une fonction de hachage sélectionnée dans une famille, comme c'est le cas pour le principe Carter&Wegman, mais il ne nécessite pas de disposer d'aléas k(i) préalablement partagés entre Alice et Bob.

L'invention est définie dans les revendications en annexe.

Dans la suite de la description, les notations suivantes seront utilisées :

Le flux de données utiles qu'Alice veut transmettre à Bob : $x_1$, $x_2$, ... ,$x_i$, ... Le flux en sortie : $x_1^*, x_2^*, ..., x_i^*, ...$ obtenu par l'ajout d'une étiquette (ou identifiant) $tag_i$ à chaque message $x_i$,

L'encodage des blocs $x_i^*$ transmis par la technique de « secrecy coding » est désigné par $C(x_1^*), C(x_2^*), ...., C(x_i^*), ...$ produisant après transmission les flux $X_1^*, X_2^*, ..., X_i^*, ...$ reçus par Bob,

En réception, après le décodage des flux encodés $X_i^*$, Bob produit les messages utiles reçus $X_1$, $X_2$, ... , $X_i$ ,.... et les étiquettes associées $Tag_1$, $Tag_2$, ... , $Tag_i$ ,.... Dans le cas nominal de transmission avec erreurs corrigées par le décodage selon un procédé connu de l'homme du métier, on retombe sur les flux d'informations utiles, c'est-à-dire que l'on obtient : $X_1^* = x_1^*, X_2^* = x_2^*, ..., X_i^* = x_i^*, ...$ puis $X_1 = x_1$, , $X_2 = x_2$, ... , $X_i = x_i$, ... et $Tag_1 = tag_1$, $Tag_2 = tag_2$ ..., $Tag_i = tag_i$.

L'invention concerne un procédé pour assurer l'intégrité de données en utilisant un protocole de codage secret assurant une confidentialité inconditionnelle des données à transmettre entre au moins un émetteur A et un récepteur B, caractérisé en ce qu'il comporte au moins les étapes suivantes :

Pour transmettre un message $x_i$ l'émetteur A ajoute au message $x_i$, contenant les données à transmettre, une étiquette $tag_i$ définie par $tag_i$ h($x_i$), en utilisant une fonction de hachage h connue uniquement de l'émetteur A et du récepteur B, destinée à garantir l'authentification et le contrôle d'intégrité des données transmises,

Le message $x_i^*$ composé du message des données utiles $x_i$ et de l'étiquette $tag_i$ est encodé pour produire un message $C(x_i^*)$ qui est transmis au récepteur B, l'encodage est réalisé de manière à garantir la confidentialité à l'aide d'un codage secret,

Après transmission, le récepteur B reçoit le message $X_i^*$ auquel il applique un décodage secret pour retrouver un message de données $X_i$ et une étiquette $Tag_i$, puis le récepteur B contrôle l'authentification et l'intégrité du message utile reçu $X_i$ en vérifiant que la relation $Tag_i = h(X_i)$ est bien respectée, garantissant $X_i = x_i$.

L'étiquette ajoutée au message $x_i$ est générée par une fonction de hachage $h_{k0}(x_i)$, soit $tag_i = h_{k0}(x_i)$, la fonction de hachage $h_{k0}$ dépend d'une clé initiale $k_0$ transmise de manière confidentielle par l'émetteur A au récepteur B, en utilisant le codage secret.

Selon un mode de réalisation, la clé initiale secrète $k_0$ est, par exemple, échangée entre l'émetteur A et le récepteur B en utilisant un protocole de Maurer.

Selon un mode de réalisation, la clé initiale secrète $k_0$ est obtenue en utilisant un protocole de génération de clé secrète SKG (Secret Key Generation).

L'invention concerne aussi un système pour assurer l'intégrité des données confidentielles entre au moins un émetteur A et un récepteur B, en utilisant la technique de codage secret ou secrecy coding. Le système est caractérisé en ce que l'émetteur A comporte un processeur configuré pour ajouter aux messages contenant les données à transmettre une étiquette tag$_i$ = h($x_i$) définie en utilisant une fonction h connue uniquement de l'émetteur A et de l'émetteur B et garantissant l'authentification et le contrôle d'intégrité des données transmises, et le récepteur B comprend un processeur configuré pour vérifier après décodage secret d'un message reçu $X_i$ et d'une étiquette reçue Tag$_i$, l'intégrité dudit message en vérifiant le bon respect de la relation Tag$_i$ = h($X_i$), la transmission du message utilisant un protocole de codage secret.

Pour la génération de l'étiquette par la fonction h, le processeur peut être configuré pour exécuter une fonction de hachage $h_{k_0}(x_i)$ dépendant d'une clé initiale $k_0$ transmise de manière confidentielle par l'émetteur A au récepteur B, en utilisant le codage secret.

L'invention est utilisée pour un émetteur et/ou un récepteur correspondant à un nœud ou un terminal dans un réseau de communication.

D'autres caractéristiques et avantages de la présente invention apparaîtront mieux à la lecture de la description, d'exemples de réalisation donnés à titre illustratif et nullement limitatif, annexée des figures qui représentent :

- Figure 1, un schéma global du procédé mis en œuvre par l'invention, et

- Figure 2, un schéma représentant l'ajout d'un tag au niveau des données avant transmission au bloc de codage.

La solution objet de la présente invention repose sur le principe suivant (Alice joue le rôle de l'émetteur, Bob celui du destinataire, le même principe se décline pour les deux sens de la communication):

1) Quand l'émetteur Alice initie une session de communication vers le destinataire Bob, il tire au hasard une clé $k_0$ qu'il transmet au destinataire Bob en toute confidentialité par le procédé de secrecy coding (sans clé) ;

2) Puis, à chaque message $x_i$ qu'Alice veut transmettre à Bob, il utilise le mécanisme de secrecy coding pour transmettre le message ($x_i$, tag(i)), i.e. $x_i$ complété avec un tag noté tag(i), tel que :

$$\text{tag}_i = h_{k_0}(x_i)$$

Le tag d'intégrité tag$_i$ est plus simple que celui utilisé dans la solution Carter&Wegman.

En réception, Bob décode $X_i^*$ suivant le principe du secrecy coding, il récupère le message utile $X_i$ et le tag associé Tag$_i$ puis vérifie l'authentification et l'intégrité en vérifiant que l'étiquette Tag$_i = h_{k_0}(X_i)$ est bien respectée.

Afin de mieux faire comprendre le procédé selon l'invention, l'exemple est donné dans le cas d'un échange entre un premier utilisateur émetteur/récepteur A (Alice) et un deuxième utilisateur émetteur/récepteur B (Bob), en présence d'un récepteur tiers E (Eve) non autorisé qui est susceptible d'intercepter les communications et d'accéder au contenu des données échangées entre A et B.

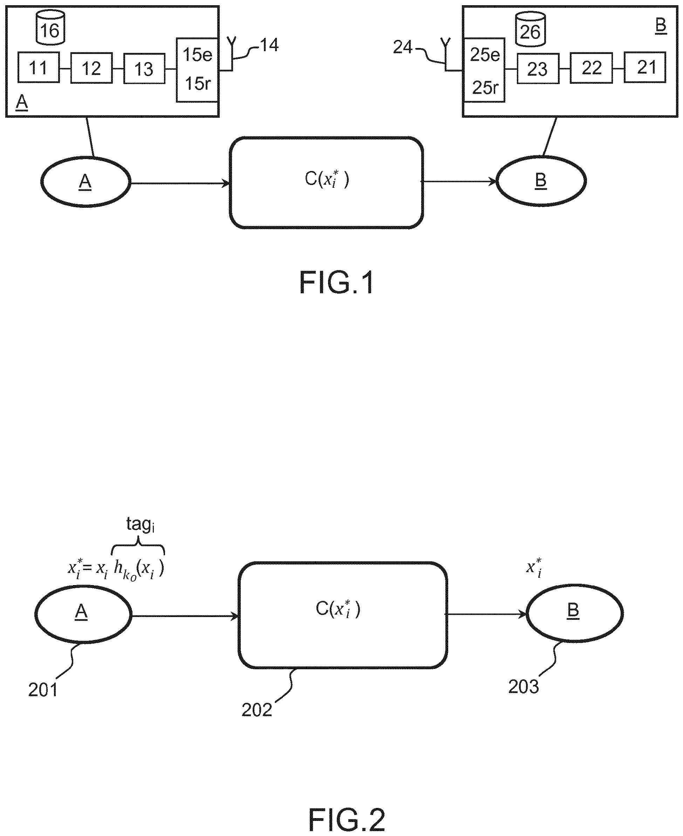

La figure 1 illustre un exemple de système selon l'invention. L'émetteur/récepteur A est, par exemple, un nœud ou un terminal d'un réseau de communication comportant une unité de calcul 11, un module de codage/décodage 12, un module de modulation/démodulation 13, un module composé d'antennes 14, et des moyens d'émission et réception radio 15e, 15r. L'unité de calcul 11 est configurée pour insérer au niveau des données à coder ou des messages à transmettre un « tag » ayant notamment pour objectif d'augmenter la sécurité (authentification, intégrité) dans la transmission du message.

De même, l'émetteur/récepteur B, 20, comporte, par exemple, une unité de calcul 21, un module de codage/décodage 22, un module de modulation/démodulation 23, un module composé d'antennes 24, des moyens d'émission et de réception radio 25e, 25r. L'unité de calcul 21 est configurée pour lire les tags et exploiter les résultats de lecture aux fins d'authentification de l'émetteur et de contrôle d'intégrité des messages transmis par cet émetteur.

Le bloc de secrecy coding 30 est connu de l'homme du métier et ne sera pas détaillé. Il a pour fonction d'assurer la confidentialité de toutes les données transmises entre A et B.

Il est possible d'utiliser un bloc de secrecy coding complété par une fonction de scrambling sans clé, comme décrit dans la demande de brevet FR 1701398.

La figure 2 illustre de manière détaillée les étapes d'une première variante de l'invention ayant notamment pour objectif d'augmenter la sécurité de la transmission de données. Le procédé, dans son fonctionnement normal, ne requiert pas de clé de chiffrement.

Le message transmis peut être composé de blocs de données, de bits, ou se présenter sous un format connu dans le domaine de la sécurisation de transmission des données.

La figure 2 représente de manière détaillée les étapes mises en œuvre par le procédé selon l'invention qui comprend une étape où un identifiant tag$_i$ est ajouté au message (données) avant sa transmission vers le bloc de « secrecy coding » afin d'augmenter l'intégrité de transmission.

Lorsque l'émetteur Alice souhaite transmettre un message $x_i$, il va, 201, au préalable de la transmission du message $x_i$ au bloc de codage, ajouter une « étiquette » tag$_i$ au contenu de ce message $x_i$. L'étiquette ou tag est calculée selon la description donnée ci-avant,

$$x_i^* = (x_i, \text{tag}_i)$$

, i.e. $x_i$ complété avec un tag noté tag$_i$, tel que tag$_i$ = $h_{k_0}(x_i)$.

Le message $x_i^*$ comprenant les données initiales à coder et l'étiquette tag$_i$ est transmis au bloc de secrecy coding 202. Puis le message encodé et modulé $C(x_i^*)$ est transmis à Bob, le message effectivement reçu par Bob (entaché d'éventuelles erreurs de transmission) étant noté $X_i^*$.

Bob, après décodage du message reçu $X_i^*$ suivant un principe de décodage secret, produit les données utiles reçues $X_i$ et les étiquettes associées reçues Tag$_i$, puis il vérifie l'authentification et l'intégrité dudit message en vérifiant que Tag$_i$ = $h_{k_0}(X_i)$, ce qui garantit alors que $X_i = x_i$ et Tag$_i$ = tag$_i$, 203.

Lors d'une première étape d'initialisation pour calculer les étiquettes tag$_i$, Alice et Bob vont s'échanger une clé secrète $k_0$. Cet échange se fait de façon confidentielle, en employant le bloc de codage secret. Différentes variantes sont ici possibles :

◦ L'utilisation du protocole de Maurer connu de l'homme du métier,
◦ L'utilisation d'un protocole de génération de clés secrètes (SKG pour Secret Key Generation) connu de l'homme du métier, ou encore
◦ Tout autre protocole d'échange confidentiel sans clé préétablie ou secret partagé.

Lors de l'étape de communication, Alice utilise une fonction de hachage pour calculer l'étiquette tag$_i$ associée à chaque message $x_i^*$, comme indiqué ci-dessus tag$_i$ = $h_{k_0}(x_i)$, Bob sera le seul à accéder à cette information, car les données nécessaires à la restitution de l'étiquette tag$_i$ et à son exploitation pour authentifier Alice et contrôler l'intégrité des messages transmis sont enfouies dans le message encodé secrètement et transmis de manière confidentielle. L'étiquette tag$_i$ du $i^{th}$ message est ainsi, $h_{k_0}(x_i)$, où $k_0$ est une clé définie au démarrage du protocole. La clé est transmise de manière confidentielle par le schéma de secrecy coding entre Alice et Bob. Selon la clé $k_0$, le procédé choisit une fonction de hachage parmi une famille de fonctions de hachage dite « universelle », terme connu de l'homme du métier. La clé $k_0$ partagée entre Alice et Bob peut être la même pour tous les messages.

Pour la constitution du tag d'intégrité, toute fonction présentant des caractéristiques similaires à celles de la fonction de hachage dite universelle présentée dans l'exemple ci-dessus (notamment le fait d'être inconnue de l'attaquant) pourra être utilisée, sans sortir du cadre de l'invention.

L'invention présente l'avantage d'augmenter la sécurité dans la transmission des données sans avoir à utiliser de clés secrètes, dans le cadre d'un fonctionnement normal du système. Les coûts d'un tel système sont modestes.

Le procédé selon l'invention présente notamment l'avantage de n'utiliser aucune clé secrète préalablement partagée entre l'émetteur et le récepteur :

a) D'une part, il fait intervenir une unique clé $k_0$ secrète qui est transmise directement d'Alice vers Bob, dans une phase préliminaire de la session de communication entre Alice et Bob, la transmission étant protégée en confidentialité par l'usage du bloc « secrecy coding » (sans clé) ;
b) D'autre part, ce nouveau mécanisme d'intégrité inconditionnellement sûr est beaucoup plus facile à mettre en œuvre que la solution Carter&Wegman de l'état de l'art, notamment en ce qu'il n'a pas besoin à chaque nouveau message m(i) traité de consommer une nouvelle clé secrète de message k(i) préalablement partagée nécessaire au fonctionnement du principe Carter&Wegman.

**Revendications**

1. - Procédé pour assurer l'intégrité de données en utilisant un protocole de codage secret sans clé assurant une confidentialité inconditionnelle des données à transmettre entre au moins un émetteur A et un récepteur B, le procédé comportant au moins les étapes suivantes :

une première étape d'initialisation, dans laquelle l'émetteur A transmet de manière confidentielle au récepteur B une clé secrète $k_0$ en utilisant le codage secret (202),
une étape de transmission de plusieurs messages $x_i$ contenant les données à transmettre, procédé dans lequel:

pour transmettre chaque message $x_i$ l'émetteur A ajoute au message $x_i$, une étiquette tag$_i$ définie par tag$_i$ = $h_{k_0}(x_i)$, en utilisant une fonction de hachage $h_{k_0}(x_i)$, connue uniquement de l'émetteur A et du récepteur B, destinée à garantir l'authentification et le contrôle d'intégrité des données transmises (201), la fonction de hachage $h_{k_0}$ dépendant de la clé initiale $k_0$ transmise de manière confidentielle par l'émetteur A au récepteur B, en utilisant le codage secret (202),

le message $x_i^*$ composé du message des données utiles $x_i$ et de l'étiquette tag$_i$ est encodé pour produire un message $C(x_i^*)$ qui est transmis au récepteur B, l'encodage étant réalisé de manière à garantir la confidentialité à l'aide du codage secret (202), après transmission, (203), le récepteur B reçoit le message $X_i^*$ auquel il applique un décodage secret pour retrouver un message de données $X_i$ et l'étiquette Tag$_i$, puis il contrôle l'authentification et l'intégrité du message utile reçu $X_i$ en vérifiant que la relation Tag$_i$ = h(X$_i$) est bien respectée, garantissant $X_i = x_i$.

2. - Procédé selon la revendication 1 **caractérisé en ce que** la clé initiale secrète $k_0$ est échangée entre l'émetteur A et le récepteur B en utilisant un protocole de Maurer.

3. - Procédé selon la revendication 1 **caractérisé en ce que** la clé initiale secrète $k_0$ est obtenue en utilisant un protocole de génération de clé secrète SKG (Secret Key Generation).

4. - Système pour assurer l'intégrité des données confidentielles entre au moins un émetteur A et un récepteur B, en utilisant la technique de codage secret ou secrecy coding sans clé, système dans lequel:

l'émetteur A est configuré pour, dans une première étape d'initialisation, transmettre de manière confidentielle au récepteur B une clé secrète $k_0$ en utilisant le codage secret (202), et pour transmettre, en utilisant le protocole de codage secret, plusieurs messages contenant les données à transmettre au récepteur B, l'émetteur A comporte un processeur (11) configuré pour ajouter à chaque message contenant les données à transmettre une étiquette tag$_i$ = h($x_i$) définie en utilisant une fonction $h_{k_0}(x_i)$ connue uniquement de l'émetteur A et du récepteur B, et garantissant l'authentification et le contrôle d'intégrité des données transmises (201), la fonction de hachage $h_{k_0}(x_i)$ dépendant de la clé initiale $k_0$ transmise de manière confidentielle par l'émetteur A au récepteur B, en utilisant le codage secret (202), et le récepteur B comprend un processeur (21) configuré pour vérifier, après décodage secret d'un message reçu $X_i^*$ pour retrouver un message de données $X_i$ et l'étiquette reçue Tag$_i$, l'intégrité dudit message en vérifiant le bon respect de la relation Tag$_i$ = h(X$_i$).

5. - Système selon la revendication 4 **caractérisé en ce qu'**un émetteur et/ou un récepteur est un nœud ou un terminal dans un réseau de communication.

**Patentansprüche**

1. Verfahren zum Gewährleisten der Integrität von Daten unter Verwendung eines schlüssellosen Geheimcodierungsprotokolls, das eine bedingungslose Vertraulichkeit der zwischen mindestens einem Sender A und einem Empfänger B zu übertragenden Daten gewährleistet, wobei das Verfahren mindestens die folgenden Schritte aufweist:

einen ersten Initialisierungsschritt, in dem Sender A unter Verwendung der Geheimcodierung (202) vertraulich einen Geheimschlüssel $k_0$ an Empfänger B überträgt,
einen Schritt des Übertragens mehrerer die zu übertragenden Daten enthaltender Nachrichten $x_i$,
bei welchem Verfahren:

Sender A zum Übertragen jeder Nachricht $x_i$ zu der Nachricht $x_i$ ein Etikett tag$_i$, definiert durch tag$_i$ = $h_{k_0}(x_i)$, unter Verwendung einer nur Sender A und Empfänger B bekannten Hash-Funktion $h_{k_0}(x_i)$ hinzufügt mit dem Ziel, die Authentifizierung und die Integritätsprüfung der übertragenen Daten (201) zu garantieren, wobei die Hash-Funktion $h_{k_0}$ vom Anfangsschlüssel $k_0$ abhängig ist, der vertraulich von Sender A an Empfänger B übertragen wird, unter Verwendung der Geheimcodierung (202),
die sich aus der Nachricht der Nutzdaten $x_i$ und dem Etikett tag$_i$ zusammensetzende Nachricht $x_i^*$ verschlüsselt wird, um eine Nachricht $C(x_i^*)$ zu erzeugen, die an Empfänger B übertragen wird, wobei die Verschlüsselung so durchgeführt wird, dass die Vertraulichkeit mit Hilfe der Geheimcodierung (202) garantiert wird,
nach Übertragung (203) Empfänger B die Nachricht $X_i^*$, auf die er eine Geheimdecodierung anwendet, empfängt, um eine Datennachricht $X_i$ und das Etikett Tag$_i$ zurückzugewinnen, dann überprüft er die Authentifizierung und die Integrität der empfangenen Nutznachricht $X_i$ durch Verifizieren, dass die Beziehung Tag$_i$ = h(X$_i$) tatsächlich eingehalten wird, wodurch $X_i = x_i$ garantiert wird.

2. Verfahren nach Anspruch 1, **dadurch gekennzeichnet, dass** der anfängliche Geheimschlüssel $k_0$ zwischen Sender A und Empfänger B unter Verwendung eines Maurer-Protokolls ausgetauscht wird.

3. Verfahren nach Anspruch 1, **dadurch gekennzeichnet, dass** der anfängliche Geheimschlüssel $k_0$ unter Verwendung eines SKG-(Secret Key Generation)-Protokolls erhalten wird.

**4.** System zum Gewährleisten der Integrität der vertraulichen Daten zwischen mindestens einem Sender A und einem Empfänger B unter Verwendung der Technik der Geheimverschlüsselung oder des schlüssellosen Geheimcodierens, bei welchem System:

Sender A konfiguriert ist zum vertraulichen Übertragen, in einem ersten Initialisierungsschritt, unter Verwendung der Geheimcodierung (202), eines Geheimschlüssels $k_0$ an Empfänger B, und zum Übertragen, unter Verwendung des Geheimcodierungsprotokolls, mehrerer Nachrichten, die die an Empfänger B zu übertragenden Daten enthalten,

Sender A einen Prozessor (11) aufweist, der konfiguriert ist zum Hinzufügen zu jeder die zu übertragenden Daten enthaltenden Nachricht eines Etiketts $\text{tag}_i = h(x_i)$, das unter Verwendung einer nur Sender A und Empfänger B bekannten Funktion $h_{k_0}(x_i)$ definiert wird, und die Authentifizierung und die Integritätsprüfung der übertragenen Daten (201) garantiert, wobei die Hash-Funktion $h_{k_0}(x_i)$ von dem vertraulich von Sender A an Empfänger B übertragenen Anfangsschlüssel $k_0$ unter Verwendung der Geheimcodierung (202) abhängig ist, und

Empfänger B einen Prozessor (21) umfasst, der konfiguriert ist zum Verifizieren, nach Geheimdecodierung einer empfangenen Nachricht $X_i^*$ zum Rückgewinnen einer Datennachricht $X_i$ und des empfangenen Etiketts $\text{Tag}_i$, der Integrität der Nachricht unter Verifizierung der tatsächlichen Einhaltung der Beziehung $\text{Tag}_i = h(X_i)$.

**5.** System nach Anspruch 4, **dadurch gekennzeichnet, dass** ein Sender und/oder ein Empfänger ein Knoten oder ein Endgerät in einem Kommunikationsnetzwerk ist.

**Claims**

**1.** A method for ensuring the integrity of data using a keyless secrecy coding protocol ensuring unconditional confidentiality of the data to be transmitted between at least one sender A and one recipient B, the method containing at least the following steps:

a first initialisation step, in which sender A confidentially transmits a secret key $k_0$ to receiver B by using secrecy coding (202),
a step of transmitting several messages $x_i$ containing the data to be transmitted,
in which method:

to transmit each message $x_i$, sender A adds, to the message $x_i$, a tag $\text{tag}_i$, defined by $\text{tag}_i = h_{k_0}(x_i)$, by using a hash function $h_{k_0}(x_i)$ known only to sender A and to recipient B, which is intended to guarantee the authentication and the integrity control of the transmitted data (201), the hash function $h_{k_0}$ being dependent on the initial key $k_0$ transmitted confidentially by sender A to recipient B, by using the secrecy coding (202),

the message $x_i^*$, composed of the message of the useful data $x_i$ and of the tag $\text{tag}_i$ is encrypted so as to produce a message $C(x_i^*)$, which is transmitted to recipient B, the encryption being carried out so as to guarantee confidentiality using secrecy coding (202),

after transmission, (203), recipient B receives the message $X_i^*$ to which it applies secrecy decoding to retrieve a data message $X_i$ and the tag $\text{Tag}_i$, then it checks the authentication and the integrity of the received useful message $X_i$ by verifying that the relation $\text{Tag}_i = h(X_i)$ is indeed satisfied, guaranteeing $X_i = x_i$.

**2.** The method according to claim 1, **characterised in that** the secret initial key $k_0$ is exchanged between sender A and recipient B by using a Maurer protocol.

**3.** The method according to claim 1, **characterised in that** the secret initial key $k_0$ is obtained by using a secret key generation (SKG) protocol.

**4.** A system for ensuring the integrity of the confidential data between at least one sender A and one recipient B, using the secrecy coding technique or keyless secrecy coding, in which system:

sender A is configured to, in a first initialisation step, confidentially transmit a secret key $k_0$ to receiver B by using the secrecy coding (202), and to transmit several messages containing the data to be transmitted to receiver B by using the secrecy coding protocol,
sender A contains a processor (11) that is configured to add, to each message containing the data to be transmitted, a tag $\text{tag}_i = h(x_i)$, defined by using a function $h_{k_0}(x_i)$ known only to sender A and to recipient B, and guaranteeing the authentication and the integrity control of the transmitted data (201), the hash function $h_{k_0}(x_i)$ being dependent on the initial key $k_0$ transmitted confidentially by sender A to recipient B, by using the secrecy coding (202), and
recipient B comprises a processor (21) that is

**EP 3 785 411 B1**

configured to verify, after secrecy decoding of a received message $X_i^*$ to retrieve a data message $X_i$ and the received tag $\text{Tag}_i$, the integrity of said message by verifying that the relation $\text{Tag}_i = h(X_i)$ is indeed satisfied.

5. The system according to claim 4, **characterised in that** a sender and/or a recipient is a node or a terminal in a communication network.

FIG.1

FIG.2

**Documents brevets cités dans la description**

- FR 1701398

- FR 3076365

**Littérature non-brevet citée dans la description**

- Secrecy coding for the wiretap channel using best known linear codes. **AL-HASSAN SALAH et al.** GLOBAL INFORMATION INFRASTRUCTURE SYMPOSIUM - GIIS 2013. IEEE, 28 October 2013, 1-6
- Coding for Secrecy: An Overview of Error-Control Coding Techniques for Physical-Layer Security. **HARRISON WILLIE K et al.** IEEE SIGNAL PROCESSING MAGAZINE. IEEE, 01 September 2013, vol. 30, 41-50

- NEW HASH FUNCTIONS AND THEIR USE IN AUTHENTICATION AND SET EQUALITY. **WEGMAN M N et al.** JOURNAL OF COMPUTER AND SYSTEM SCIEN. ACADEMIC PRESS, INC., June 1981, vol. 3, 265-279